# FASCICULE DE BREVET EUROPEEN

(11) **EP 4 239 205 B1**
(45) Date de publication et mention de la délivrance du brevet: **24.04.2024**
(21) Numéro de dépôt: 23150584.3
(22) Date de dépôt: 06.01.2023
(51) Int. Cl.: F16B 7/04, F16B 7/22

(54) **DISPOSITIF D'ENTRETOISEMENT POUR LA FIXATION D'UNE OSSATURE DE DOUBLAGE DE PAROI**
STREBENVORRICHTUNG ZUR BEFESTIGUNG EINES WANDVERSCHALUNGSRAHMENS
BRACING DEVICE FOR ATTACHING A WALL LINING FRAMEWORK

(30) Priorité: 04.03.2022 FR 2201901
(43) Date de publication de la demande: 06.09.2023
(73) Titulaire: MAFIGOP, 42330 Chamboeuf (FR)
(72) Inventeur: CHABANNE, Maxence, 42530 SAINT GENEST LERPT (FR); FOURNIER, Benjamin, 42330 CHAMBOEUF (FR)
(74) Mandataire: Cabinet Laurent & Charras

(56) Documents cités:
- FR-A1- 2 874 040
- FR-A1- 2 946 071
- FR-A1- 2 970 531

## Description

### Domaine technique

La présente invention se rapporte au domaine technique des dispositifs d'entretoisement, notamment pour la fixation d'une ossature de doublage de paroi, par exemple permettant l'isolation des murs.

### Art antérieur

Actuellement, les bâtiments neufs ou rénovés doivent répondre à des normes exigeant une consommation d'énergie de plus en plus faible afin, par exemple, de réduire l'impact de nos modes de vie sur l'environnement.

Afin de répondre à ces exigences, une bonne isolation thermique et/ou une bonne étanchéité à l'air sont nécessaires. Un dispositif de doublage est rapporté sur une ossature de doublage qui est elle-même fixée à des éléments de structure de la paroi à doubler. Un calfeutrage d'isolation, qui comprend par exemple une ou plusieurs couches ou panneaux de matériau isolant ainsi qu'une membrane ou un film d'étanchéité à l'air, est inséré entre la paroi à doubler et le dispositif de doublage.

La fixation de l'ossature de doublage aux éléments de structure de la paroi à doubler est réalisée au moyen d'accessoires d'entretoisement régulièrement espacés. Chaque accessoire d'entretoisement comporte typiquement un corps principal en forme de tige s'étendant transversalement à une paroi à doubler et au parement, dont une extrémité est pourvue de moyens de fixation en porte à faux à un élément de structure de la paroi à doubler, et dont l'autre extrémité porte des moyens d'assemblage avec l'ossature de doublage.

On connait le document EP1880066 qui décrit un dispositif d'entretoisement entre deux fourrures comprenant une tête de réglage fixée à une première fourrure et destiné à recevoir en insertion une tige filetée fixée à la deuxième fourrure.

Dans ce document, la tête de réglage est prolongée par un levier monobloc actionnable pour pivoter la tête dans une position de blocage par rapport à la tige. Ainsi, le pivotement du levier entraine aussi le pivotement de la tête, ce qui n'est pas adéquat.

On connait le document EP2476921 qui tente de remédier à cet inconvénient et qui décrit, notamment aux figures 1F et 1G, un dispositif d'entretoisement pour la fixation de deux fourrures l'une à l'autre dans une position réglable en écartement, les fourrures s'étendant dans des plans parallèles, le dispositif comprenant :
- une tige filetée comprenant une base comportant des moyens de liaison avec une première fourrure ;
- une tête de réglage comportant des moyens de liaison à une deuxième fourrure, et montée avec capacité de coulissement autour de la tige ;
- un levier distinct monté pivotant sur la tête dans un plan vertical, notamment orthogonal aux plans dans lesquels s'étendent les fourrures.

Le levier est ainsi adapté pour passer d'une position de réglage dans laquelle la tête est libre de coulisser autour de la tige filetée, à une position de blocage du coulissement en étant engagé avec la tige filetée.

Cependant, la résistance de ce type de dispositif peut encore être améliorée. Notamment, ce type de dispositif doit pouvoir résister à l'exercice d'un effort de traction de 75 kg, et d'au moins 50 kg poussé, selon la norme NF DTU 25/41. Par résister, on entend que le levier ne doit pas se désengager de la tige filetée. Or, lors d'un impact d'un poids de 50 kg sur un doublage de paroi possédant ce type de dispositif, la tige peut avoir tendance à de décaler angulairement de sorte à désengager le levier.

L'ergonomie de ce type de dispositif peut également être améliorée.

Ce document propose un deuxième mode de réalisation, figure 6, dans lequel le levier pivote dans le plan dans lequel s'étendent les fourrures pour venir agir sur une autre pièce, qui elle s'engage avec la tige filetée. Plus précisément, le pivotement du levier vient resserrer deux demi-coquilles contre la tige filetée.

Cette solution semble plus résistante, mais est également plus complexe à mettre en oeuvre et à fabriquer.

Un autre dispositif d'entretoisement est connu par FR2970531.

Il existe ainsi un besoin d'améliorer le blocage en position d'écartement d'un tel dispositif tout en rendant son utilisation plus aisée et moins onéreuse.

### Exposé de l'invention

L'un des buts de l'invention est donc de proposer un dispositif d'entretoisement pour la fixation de deux fourrures l'une à l'autre dans une position réglable en écartement pouvant répondre à l'ensemble des inconvénients précités dans l'art antérieur.

Notamment, l'objectif de la présente invention est de fournir un dispositif d'entretoisement comprenant un blocage en position d'écartement amélioré, le tout en ayant une utilisation aisée à moindre coût.

À cet effet, il a été mis au point un dispositif d'entretoisement pour la fixation de deux fourrures l'une à l'autre dans une position réglable en écartement, les fourrures s'étendant dans des plans parallèles, le dispositif comprenant :
- une tige comprenant une base comportant des moyens de liaison avec une première fourrure et des moyens d'engagement avec un levier ;
- une tête de réglage comportant des moyens de liaison à une deuxième fourrure, et montée avec capacité de coulissement autour de la tige afin de régler en écartement les deux fourrures l'une de l'autre ;
- le levier, distinct, et équipé de moyens d'engagement avec la tige, le levier est monté pivotant sur la tête pour passer d'une position de réglage dans laquelle la tête est libre de coulisser autour de la tige, à une position de blocage du coulissement en étant engagé directement avec la tige et contre une paroi latérale externe de la tige.

Selon l'invention, le levier est monté pivotant dans un plan orthogonal à la tige, et donc parallèle à celui du plan dans lequel s'étendent les fourrures.

De cette manière, le fait que le levier pivote dans un plan orthogonal à la tige et donc parallèle de celui où s'étendent les fourrures, et qui s'engage directement avec la tige permet d'obtenir une résistance accrue au désengagement et de satisfaire la norme NF DTU 25/41, en vigueur à la date de dépôt. En pratique, même si la tige se décale angulairement lors d'un test de poussé à 50 kg, le levier engagé transversalement avec la tige reste correctement engagé, rendant sa mise en oeuvre plus sure. Par ailleurs, le fait que le levier pivote dans un plan orthogonal à la tige et donc parallèle aux fourrures permet aussi d'améliorer l'ergonomie d'utilisation puisque le levier est facilement accessible et ne se retrouve pas enfoncé dans l'isolant comme cela peut être le cas dans l'art antérieur. Visuellement, on peut aisément constater que le levier est bien en position de verrouillage.

Selon une forme de réalisation préférée, et afin d'améliorer le blocage en position du levier sur la tige, les moyens d'engagement du levier avec la tige sont de préférence sous la forme d'un crochet apte à se crocheter autour de la tige en position de blocage.

Toujours dans le but améliorer le blocage en position du levier sur la tige, et satisfaire le DTU 25/41, le crochet comprend au moins deux nervures d'engagement avec les moyens d'engagement de la tige qui sont, par exemple, sous la forme d'un filetage ou d'une succession de rainures annulaires. Les nervures s'étendent dans le plan de pivotement du levier.

Pour sécuriser la position de blocage, et éviter le désengagement intempestif du levier, le levier comprend de préférence des moyens de retenue destinés à coopérer avec des moyens de retenue complémentaires de la tête, lorsque le levier est pivoté en position de blocage.

Dans un mode de réalisation particulier de conception simple et peu onéreuse, les moyens de retenue comprennent au moins un ergot en saillie d'une face du levier apte à s'engager dans un orifice complémentaire ménagé dans la tête.

Dans un autre mode de réalisation, les moyens de retenue comprennent une partie en crochet en saillie d'une face du levier parallèle au plan de pivotement du levier, apte à se crocheter sur une bordure périphérique de la tête.

Afin d'améliorer l'ergonomie d'utilisation, mais aussi d'éviter les risques de désengagement du levier, la tête comprend une ouverture latérale débouchant sur la tige, dans laquelle le levier est destiné à pénétrer en position de blocage. Ainsi, la partie du levier qui coopère avec la tige se retrouve logée et protégée à l'intérieur de la tête. Ceci évite aussi que de l'isolant se retrouve coincé entre le levier et la tige lors du blocage en position, ce qui réduirait la force d'engagement.

Le levier est monté pivotant dans la tête par exemple par l'intermédiaire de deux tétons en saillie de part et d'autre d'une face du levier parallèle au plan de pivotement du levier, pour former un axe de pivotement, les tétons étant engagés dans des orifices complémentaires ménagés dans la tête. Cette conception est simple et fiable.

### Brève description des dessins

D'autres avantages et caractéristiques ressortiront mieux de la description qui va suivre, donnée à titre d'exemple non limitatif, du système selon l'invention, à partir des dessins annexés dans lesquels :
[Fig. 1] est une représentation, en perspective et vue de côté du dispositif d'entretoisement de la présente invention, en position de blocage du levier.
[Fig. 2] est une représentation similaire à celle de la figure 1, en perspective e vue du côté de la tête.
[Fig. 3] est une représentation similaire à celle de la figure 2, en position de réglage.
[Fig. 4] est une représentation en perspective, d'un deuxième mode de réalisation selon l'invention, en position de blocage.
[Fig. 5] est une représentation similaire à celle de la figure 4, en position de réglage.
[Fig. 6] est une représentation vue de face, du levier isolé selon un premier mode de réalisation de l'invention.
[Fig. 7] est une représentation similaire à celle de la figure 6, en perspective.
[Fig. 8] est une représentation vue de face, du levier selon un troisième mode de réalisation de l'invention.
[Fig. 9] est une représentation similaire à celle de la figure 8, en perspective.
[Fig. 10] est une représentation en perspective, de la tête isolée selon un deuxième mode de réalisation de l'invention.
[Fig. 11] est une représentation en perspective, du dispositif fixé à deux fourrures.

### Description détaillée de l'invention

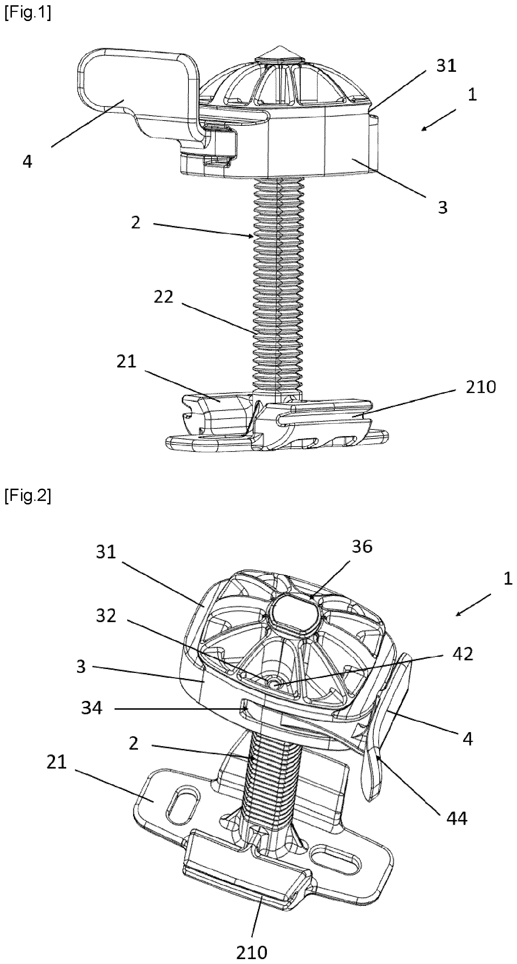

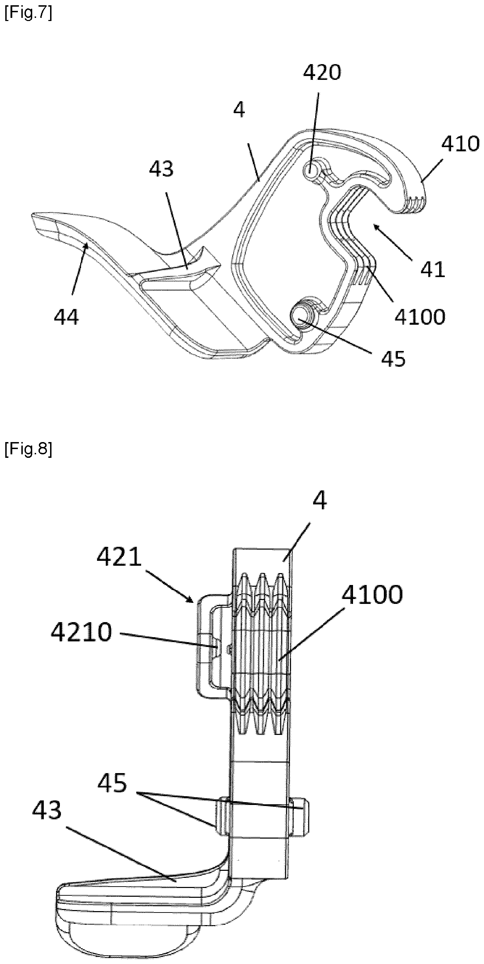

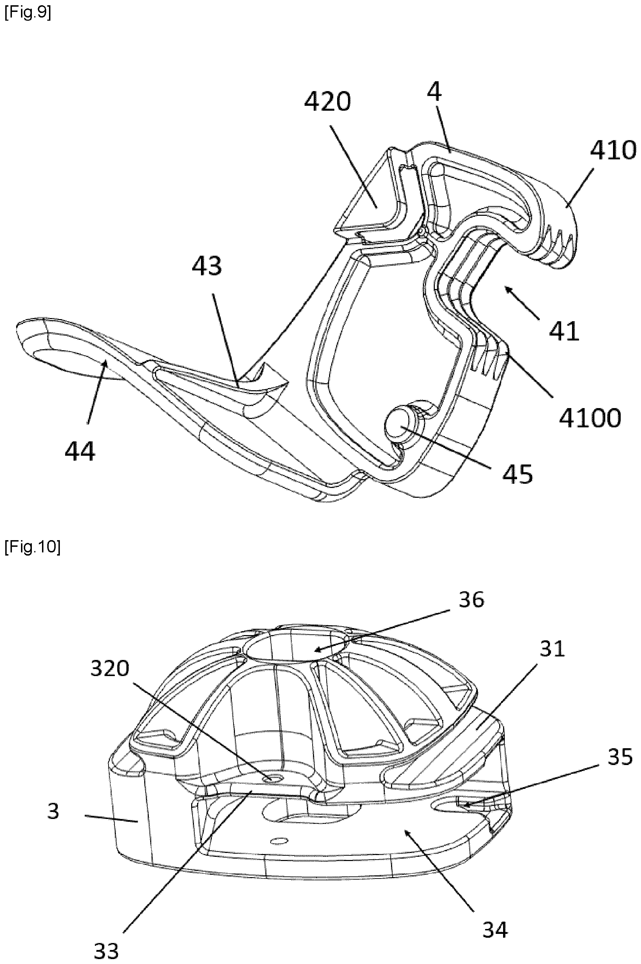

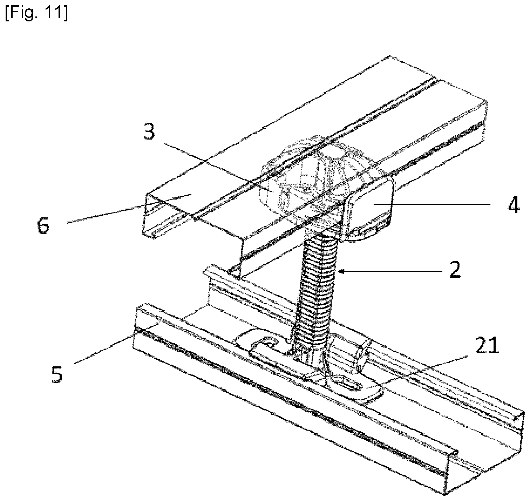

En référence aux figures 1 à 11, la présente invention concerne un dispositif (1) d'entretoisement pour la fixation de deux fourrures (5, 6) l'une à l'autre dans une position réglable en écartement.

En installation, les deux fourrures (5, 6), s'étendant dans des plans parallèles, notamment celui de la paroi qui constitue le doublage, et se présentent par exemple sous la forme de profilés en U.

Pour faciliter son utilisation, le dispositif (1) d'entretoisement comprend une tige (2) comprenant une base (21) comportant des moyens de liaison (210) avec une première fourrure (5) et une tête (3) de réglage comportant des moyens de liaison (31) à une deuxième fourrure (6), et montée avec capacité de coulissement autour de la tige (2), afin de pouvoir régler en écartement les deux fourrures (5, 6) l'une de l'autre.

Les moyens de liaison (210, 31) de la tige (2) ou de la tête (3) aux fourrures (5, 6) sont de tout type approprié, de préférence les moyens de liaison (210, 31) aux fourrures (5, 6) sont sous la forme de rainures d'encliquetage bien connues de l'état de la technique.

Les moyens d'engagement (22) de la tige (2) sont de tout type approprié, de préférence sous la forme de rainures annulaires, par exemple en forme de V.

La capacité de coulissement de la tête (3) autour de la tige (2) est réalisée par tout type d'élément approprié, de préférence la tête (3) comprend un orifice (36) qui permet à ladite tête (3) de coulisser autour de la tige (2).

Dans un mode de réalisation préféré, le dispositif (1) comprend un levier (4) distinct monté pivotant sur la tête (3) pour passer d'une position de réglage dans laquelle la tête (3) est libre de coulisser autour de la tige (2), à une position de blocage du coulissement en étant engagé directement avec la tige (2) et contre une paroi latérale externe de la tige (2).

Afin de renforcer la position de blocage et améliorer l'ergonomie d'utilisation, le levier (4) est monté pivotant dans un plan orthogonal à la tige et donc dans un plan parallèle au plan dans lequel s'étendent les fourrures (5, 6), et s'engage directement avec la tige (2) en position de blocage.

Le levier (4) comprend des moyens d'engagement complémentaires (41) à la tige (2) de tout type approprié, de préférence sous la forme d'un un crochet (410) apte à se crocheter autour de la tige (2) en position de blocage.

Dans un mode de réalisation préféré, présentant une résistance accrue, le crochet (410) comprend au moins deux nervures d'engagement (4100), voire quatre, avec les rainures annulaires (22) de la tige (2).

Les nervures d'engagement (4100) du crochet (410) s'étendent dans le plan de pivotement du levier (4) pour s'engager correctement avec les rainures (22) de la tige (2).

Dans un mode de réalisation préféré, et afin d'empêcher davantage le pivotement intempestif du levier (4) pour sortir de la position de blocage, le levier (4) comprend des moyens de retenue (42) destinés à coopérer avec des moyens de retenue complémentaires (32) ménagés dans la tête (3), lorsque le levier (4) est pivoté en position de blocage.

Les moyens de retenue (42) sont de tout type approprié, de préférence sous la forme d'au moins un ergot (420) en saille d'une face du levier (4), ladite face est de préférence, parallèle au plan de pivotement du levier (4).

De préférence, le levier (4) comprend deux ergots (420) s'étendant de part et d'autre de la face du levier (4) pour augmenter l'effet de blocage.

Les moyens de retenue complémentaires (32) ménagés dans la tête (3) sont de tout type approprié, de préférence sous la forme d'un orifice complémentaire (320) à l'ergot disposé, par exemple, sur une face de la tête (3) parallèle à la face du levier (4) comprenant les ergots (420).

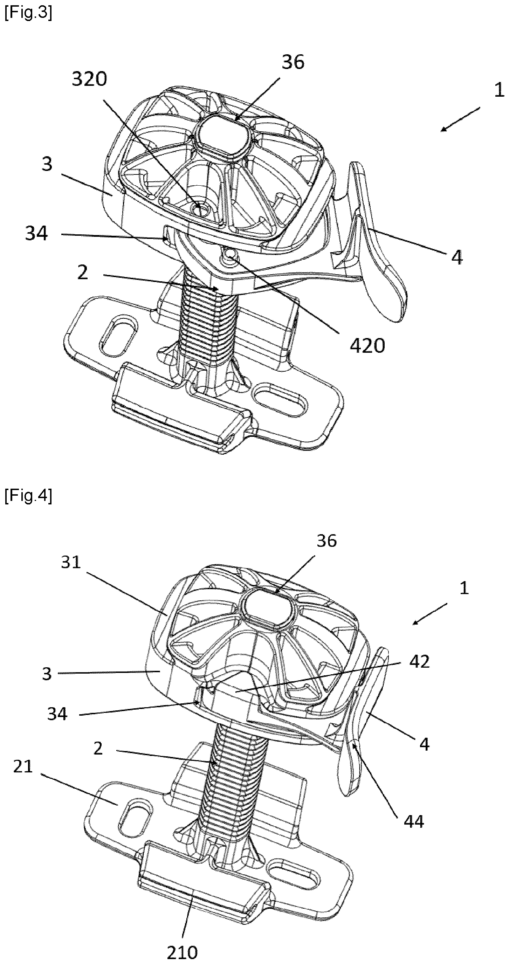

Ainsi, les ergots (420) sont aptes à s'engager dans l'orifice complémentaire (320) ce qui permet d'améliorer de bloquer le levier (4) en position de blocage, voir figures 2 et 3.

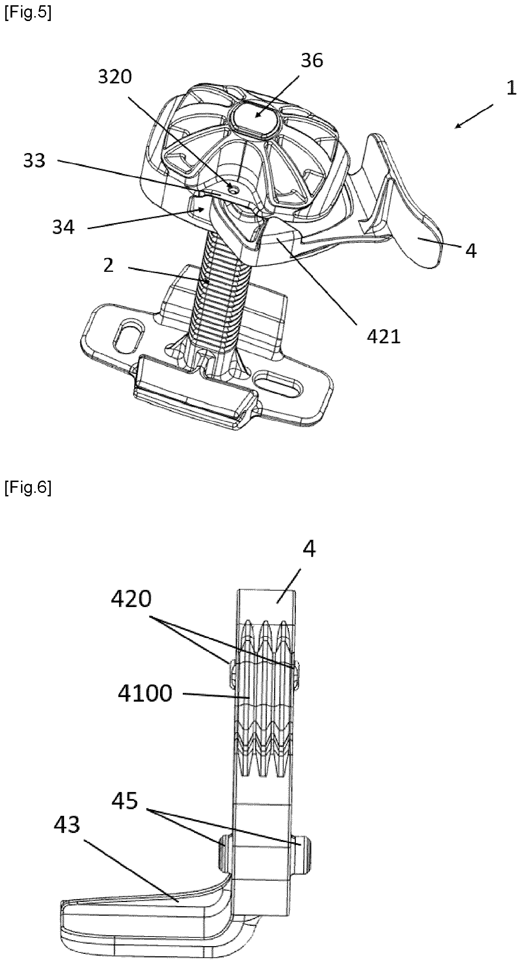

Dans un deuxième mode de réalisation, les moyens de retenue du levier (4) comprennent une partie en crochet (421) en saillie d'une face du levier (4), ladite face étant parallèle au plan de pivotement du levier (4). La partie en crochet (421) est apte à se crocheter sur une bordure périphérique (33) de la tête (3), voir figures 4 et 5.

L'extrémité du crochet (421) destiné à venir se crocheter sur la bordure périphérique (33) de la tête (3) comprend par exemple une rampe d'encliquetage (non représentée) afin d'améliorer le blocage du pivotement du levier (4).

Dans un troisième mode de réalisation, l'extrémité du crochet (421) destiné à venir se crocheter sur la bordure périphérique (33) de la tête (3) comprend par exemple un téton (4210) en saillie apte à s'insérer dans un orifice complémentaire (320) ménagé dans la tête (3).

Bien entendu, les moyens de retenue du levier (4) peuvent comprendre à la fois des ergots (420) en saillie d'une face du levier (4) parallèle au plan de pivotement du levier (4) apte à s'insérer dans des orifices complémentaires (32) de la tête (3) et une partie en forme de crochet (421) en saillie de la même face du levier (4) apte à se crocheter sur une bordure périphérique (33) de la tête (3).

De préférence, la tête (3) comprend une ouverture latérale (34) débouchant sur la tige (2), dans laquelle le levier (4) est destiné à pénétrer en position de blocage pour éviter le coincement intempestif de matériau isolant lors du pivotement du levier (4), et éviter tout risque de désengagement du levier (4).

Plus précisément, il s'agit du crochet (410) qui s'engage dans l'ouverture latérale (34) afin de venir bloquer en position la tige (2) par l'intermédiaire de la tête (3).

Dans un mode de réalisation préféré, et afin d'en faciliter l'usage, le levier (4) comprend dans une partie destinée à venir en butée à l'encontre de la deuxième fourrure (6), une nervure (43) s'étendant dans un plan perpendiculaire au plan de pivotement du levier (4), et une zone incurvée (44).

Afin de permettre la rotation du levier (4), ledit levier (4) est monté pivotant dans la tête (3) par l'intermédiaire de deux tétons (45) en saillie de part et d'autre d'une face du levier (4) parallèle au plan de pivotement du levier (4), pour former un axe de pivotement. Les tétons (45) sont engagés dans des orifices complémentaires (35) ménagés dans la tête (3)

Il ressort de ce qui précède que l'invention fournit bien un dispositif (1) d'entretoisement pour la fixation de deux fourrures (5, 6) l'une à l'autre comprenant un système de blocage en écartement amélioré.

## Revendications

1. Dispositif (1) d'entretoisement pour la fixation de deux fourrures (5, 6) l'une à l'autre dans une position réglable en écartement, les fourrures (5, 6) s'étendant dans des plans parallèles, le dispositif (1) comprenant :
- une tige (2) comprenant une base (21) comportant des moyens de liaison (210) avec une première fourrure (5) et des moyens d'engagement (22) avec un levier (4) ;
- une tête (3) de réglage comportant des moyens de liaison (31) à une deuxième fourrure (6), et montée avec capacité de coulissement autour de la tige (2) ;
- le levier (4), distinct, et équipé de moyens d'engagement avec la tige, le levier est monté pivotant sur la tête (3) pour passer d'une position de réglage dans laquelle la tête (3) est libre de coulisser autour de la tige (2), à une position de blocage du coulissement en étant engagé directement avec la tige (2) et contre une paroi latérale externe de la tige (2) ;
le levier (4) étant monté pivotant dans un plan orthogonal à la tige (2).

2. Dispositif (1) selon la revendication 1, ***caractérisé* en ce que** les moyens d'engagement (41) du levier avec la tige sont sous la forme d'un crochet (410) apte à se crocheter autour de la tige (2) en position de blocage.

3. Dispositif (1) selon la revendication 2, ***caractérisé* en ce que** le crochet (410) comprend au moins deux nervures (4100) d'engagement avec les moyens d'engagement (22) de la tige (2) qui sont une succession de rainures annulaires, les nervures (4100) s'étendent dans le plan de pivotement du levier (4).

4. Dispositif (1) selon l'une des revendications précédentes, ***caractérisé* en ce que** le levier (4) comprend des moyens de retenue (42) destinés à coopérer avec des moyens de retenue complémentaires (32) de la tête (3), lorsque le levier (4) est pivoté en position de blocage.

5. Dispositif (1) selon la revendication 4, ***caractérisé* en ce que** les moyens de retenue (42) comprennent au moins un ergot (420) en saillie d'une face du levier (4) apte à s'engager dans un orifice complémentaire (320) ménagé dans la tête (3).

6. Dispositif (1) selon la revendication 4 ou 5, ***caractérisé* en ce que** les moyens de retenue (42) comprennent une partie en crochet (421) en saillie d'une face du levier (4) parallèle au plan de pivotement du levier (4) apte à se crocheter sur une bordure périphérique de la tête (3).

7. Dispositif (1) selon la revendication 1, ***caractérisé* en ce que** la tête (3) comprend une ouverture latérale (34) débouchant sur la tige (2), dans laquelle le levier (4) est destiné à pénétrer en position de blocage.

8. Dispositif (1) selon la revendication 1, ***caractérisé* en ce que** le levier (4) est monté pivotant dans la tête (3) par l'intermédiaire de deux tétons (45) en saillie de part et d'autre d'une face du levier (4) parallèle au plan de pivotement du levier (4), pour former un axe de pivotement, les tétons (45) étant engagés dans des orifices complémentaires (35) ménagés dans la tête (3).

## Patentansprüche

1. Ein Abstandshalter (1) zur Befestigung von zwei Latten (5, 6) aneinander in einer einstellbaren Trennposition, wobei sich die Latten (5, 6) in parallelen Ebenen erstrecken, umfasst der Abstandshalter (1):
- einen Stab (2) mit einer Basis (21), die Verbindungsmittel (210) zu einer ersten Latte (5) und Eingriffsmittel (22) mit einem Hebel (4) enthält;
- einen Einstellkopf (3) mit Verbindungsmitteln (31) zu einer zweiten Latte (6), montiert mit der Fähigkeit, um den Stab (2) zu gleiten;
den Hebel (4), separat, ausgestattet mit Eingriffsmitteln mit dem Stab, wobei der Hebel schwenkbar am Kopf (3) montiert ist, um von einer Einstellposition, in der der Kopf (3) frei um den Stab (2) gleiten kann, in eine Sperrposition zu bewegen, indem er direkt mit dem Stab (2) und gegen eine äußere Seitenwand des Stabes (2) in Eingriff gebracht wird; wobei der Hebel (4) in einer Ebene orthogonal zum Stab (2) schwenkbar montiert ist.

2. Der Abstandshalter (1) gemäß Anspruch 1, **dadurch gekennzeichnet, dass** die Eingriffsmittel (41) des Hebels mit dem Stab in Form eines Hakens (410) ausgebildet sind, der in der Lage ist, um den Stab (2) in der Sperrposition herum zu greifen.

3. Der Abstandshalter (1) gemäß Anspruch 2, **dadurch gekennzeichnet, dass** der Haken (410) mindestens zwei Eingriffsrippen (4100) mit den Eingriffsmitteln (22) des Stabes (2) umfasst, die eine Serie von Ringnuten sind, wobei sich die Rippen (4100) in der Schwenkebene des Hebels (4) erstrecken.

4. Der Abstandshalter (1) gemäß einem der vorhergehenden Ansprüche, **dadurch gekennzeichnet, dass** der Hebel (4) Haltemittel (42) umfasst, die dazu bestimmt sind, mit komplementären Haltemitteln (32) des Kopfes (3) zusammenzuwirken, wenn der Hebel (4) in die Sperrposition geschwenkt wird.

5. Der Abstandshalter (1) gemäß Anspruch 4, **dadurch gekennzeichnet, dass** die Haltemittel (42) mindestens einen vorstehenden Zapfen (420) von einer Seite des Hebels (4) umfassen, der in der Lage ist, in eine komplementäre Öffnung (320) im Kopf (3) einzutreten.

6. Der Abstandshalter (1) gemäß Anspruch 4 oder 5, **dadurch gekennzeichnet, dass** die Haltemittel (42) einen Hakenabschnitt (421) umfassen, der von einer Seite des Hebels (4) parallel zur Schwenkebene des Hebels (4) hervorsteht und in der Lage ist, an eine Randkante des Kopfes (3) zu greifen.

7. Der Abstandshalter (1) gemäß Anspruch 1, **dadurch gekennzeichnet, dass** der Kopf (3) eine seitliche Öffnung (34) umfasst, die zum Stab (2) führt, in die der Hebel (4) in der Sperrposition eintreten soll.

8. Der Abstandshalter (1) gemäß Anspruch 1, **dadurch gekennzeichnet, dass** der Hebel (4) im Kopf (3) schwenkbar montiert ist, mittels zweier vorstehender Stifte (45) auf beiden Seiten einer Seite des Hebels (4) parallel zur Schwenkebene des Hebels (4), um eine Schwenkachse zu bilden, wobei die Stifte (45) in komplementären Öffnungen (35) im Kopf (3) eingreifen

## Claims

1. A spacing device (1) for fixing two furring strips (5, 6) to each other in an adjustable separation position, the furring strips (5, 6) extending in parallel planes, the device (1) comprising:
- a rod (2) including a base (21) with means of connection (210) to a first furring strip (5) and means of engagement (22) with a lever (4);
- an adjustment head (3) with means of connection (31) to a second furring strip (6), and mounted with the ability to slide around the rod (2);
- the lever (4), separate, and equipped with means of engagement with the rod, the lever is pivotally mounted on the head (3) to move from an adjustment position in which the head (3) is free to slide around the rod (2), to a locking position by being engaged directly with the rod (2) and against an external lateral wall of the rod (2);
the lever (4) being pivotally mounted in a plane orthogonal to the rod (2).

2. The device (1) according to claim 1, **characterized in that** the means of engagement (41) of the lever with the rod are in the form of a hook (410) capable of hooking around the rod (2) in the locking position.

3. The device (1) according to claim 2, **characterized in that** the hook (410) includes at least two engagement ribs (4100) with the engagement means (22) of the rod (2) which are a series of annular grooves, the ribs (4100) extend in the plane of pivoting of the lever (4).

4. The device (1) according to any of the preceding claims, **characterized in that** the lever (4) includes retaining means (42) intended to cooperate with complementary retaining means (32) of the head (3), when the lever (4) is pivoted into the locking position.

5. The device (1) according to claim 4, **characterized in that** the retaining means (42) include at least one protruding lug (420) from one face of the lever (4) capable of engaging in a complementary hole (320) provided in the head (3).

6. The device (1) according to claim 4 or 5, **characterized in that** the retaining means (42) include a hook part (421) protruding from one face of the lever (4) parallel to the plane of pivoting of the lever (4) capable of hooking onto a peripheral edge of the head (3).

7. The device (1) according to claim 1, **characterized in that** the head (3) includes a lateral opening (34) leading to the rod (2), in which the lever (4) is intended to enter in the locking position.

8. The device (1) according to claim 1, **characterized in that** the lever (4) is pivotally mounted in the head (3) via two protruding studs (45) on either side of one face of the lever (4) parallel to the plane of pivoting of the lever (4), to form a pivot axis, the studs (45) being engaged in complementary holes (35) provided in the head (3).
